# EUROPEAN PATENT SPECIFICATION

(11) **EP 0 574 054 B1**
(45) Date of publication and mention of the grant of the patent: **05.03.1997**
(21) Application number: 93201347.7
(22) Date of filing: 11.05.1993
(51) Int. Cl.: C08L 51/04, C08L 69/00, C08K 3/02

(54) **Flame retardant thermoplastic composition containing an impact-resistant vinyl aromatic copolymer**
Flammhemmende thermoplastische Zusammensetzung enthaltend schlagfestes Vinylaromatencopolymerisat
Composition thermoplastique ignifuge contenant de copolymère vinylaromatique résistant à l'impact

(30) Priority: 21.05.1992 IT MI921224
(43) Date of publication of application: 15.12.1993
(73) Proprietor: ENICHEM S.p.A., I-20124 Milano (IT)
(72) Inventor: Mori, Francesco, I- 37122 Verona, (IT); Fasulo, Gian Claudio, I- 46010 San Silvestro (Mantova) (IT)
(74) Representative: Fusina, Gerolamo

(56) References cited:
- EP-A- 0 427 104
- WO-A-91/06598
- CHEMICAL ABSTRACTS, vol. 101, no. 2, 9 July 1984 Columbus, Ohio, US; abstract no. 8217,

## Description

The present invention relates to a flame retardant thermoplastic composition based on an impact resistant vinyl aromatic copolymer.

More in particular, the present invention relates to a flame retardant thermoplastic composition based on an impact resistant vinyl aromatic copolymer having excellent flow properties, satisfactory stability in the operating conditions and free from the formation of toxic combustion products.

Moulding thermoplastic compositions comprising an impact resistant vinyl aromatic copolymer, consisting of a vinyl aromatic monomer, an acrylic monomer and a rubber, and an engineering polymer, are known on the market and described, for example, in Italian Patent No. 1,000,431 and US Patent Nos. 4,526,926; 4,624,986 and 4,906,689.

Moulding compositions are also known comprising an impact resistant vinyl aromatic copolymer of the above defined type, an engineering polymer and a grafted polymer consisting of an elastomer core having a second order glass transition temperature (Tg) lower than 10 C and containing vinyl monomer chains grafted thereon. These compositions are disclosed by published European Patent Application Nos. 216,065 and 379,039.

These compositions find the use in numerous technical fields owing to their optimal combination of mechanical, chemical-physical and thermal properties.

A disadvantage, however, of these compositions is that they burn very easily and spread fire, therefore, they do not pass the customary fire test, for example the vertical UL 94 V fire tests (Underwriters Laboratory Bulletin 94). This disadvantage enormously limits the fields of application of such compositions.

In order to reduce or inhibit the flammability of these compositions it is common practice to incorporate certain additives, generally known as flame-retardant, into the composition. Halogenated compound and, particularly, bromine compounds such as pentabromodiphenyl, pentabromodiphenyl-ether, decabromo-diphenyl oxide, ethylene-bis-tetrabromophthalimide, octabromodiphenyl and so on are widely used for this purpose.

According to DE-PS 2,259,656, DE-OS 3,329,548 and DE-OS 2,329,546, halogen-containing polycarbonates may even be mixed with ABS to reduce the flammability thereof. However, these blends only acquire a rating of at least V2 in the UL 94 test by the addition of antimony trioxide and a halogen compound or by the use of very large quantities of halogen compound.

The quantities of halogen used are preferably as small as possible in order to reduce the drawbacks such as, for example, corrosion of metallic parts, development of toxic flue gas. In addition, large quantities of halogen have an adverse effect upon the properties of the compositions. In fact, a substantial decrease in the impact strength, elongation and aging-resistance, as well as in the processability and in the working stability, can be observed in the compositions to which flame-retardant, halogen-containing agents have been added.

Furthermore, some of these flame-retardant agents develop toxic substances during the processing and/or combustion, as described in CHEMOSPHERE - Vol. 15 No. 5 pages 649 - 652, 1989 and Vo. 18 - No. 1-6 pages 1235-1242, 1989.

Polymeric compositions which comprise an aromatic polycarbonate, an impact resistant vinyl aromatic polymer, for example ABS, and a flame-retardant are known, for example, from EP-A-0,174,493. According to this patent an organic monophosphate, for example, triphenyl phosphate, tricresyl phosphate,diphenylcresyl phosphate, and the like, is used as a flame-retardant. The known polymeric compositions, moreover, must comprise a halogen compound and a tetrafluoroethylene polymer which must be applied in a very special manner. The organic monophosphates tend to migrate to the surface during the process of transformation causing the so-called blooming.

Furthermore, in order to obtain a V-0 rating, according to UL-94 test, it is necessary to use the monophosphate either in combination with other flame retardants or in relative high concentrations which cause a drastic decrease of the heat resistance of the compositions.

Object of the present invention is to provide a flame-retardant composition based on an impact resistant vinyl aromatic copolymer and an aromatic polycarbonate which have not the above mentioned drawbacks.

More particularly, object of the present invention is to provide a flame-retardant halogen-free composition comprising an impact resistant vinyl aromatic copolymer and a polycarbonate, classifiable under VO rating according to the UL 94 test, which does not require the use of high concentrations of flame retardant agents and does not exhibit the phenomenon of the blooming.

According to the present invention, these and other objects are achieved by using red phosphorus as flameproofing agent.

Subject matter of the present invention is, therefore, a flame retardant composition comprising:
(A) from 70 to 5 parts by weight of an impact resistant, halogen free, vinyl aromatic copolymer, consisting of a vinyl aromatic monomer, an acrylic monomer and a rubber;
(B) from 30 to 95 parts by weight of a halogen free aromatic polycarbonate;
(C) from 0.1 to 10 parts by weight, with respect to 100 parts by weight of the mixture of the two (A) and (B) resins, of red phosphorus;
(D) from 0 to 15 parts by weight, with respect to 100 parts by weight of the mixture of the two (A) and (B) resins, of a phosphorus containing organic compound of the formula: 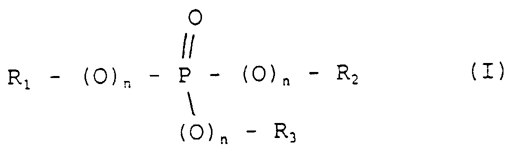 wherein R₁, R₂ and R₃ are, independently from each other, an alkyl radical containing from 1 to 8 carbon atoms or an aryl radical or an optionally alkyl-substituted aryl radical containing from 6 to 20 carbon atoms, and n represents 0 or 1; and,
(E) optionally, an anti-dripping agent.

The compositions of the present invention can also contain a grafted polymer consisting of an elastomeric core having a glass transition temperature of the second order lower than 10°C and containing chains of vinyl aromatic monomers grafted thereon, when particular mechanical properties, especially in the welding zones of injection flows, are required.

In the composition of the present invention, the impact resistant vinyl aromatic copolymer preferably ranges from 10 to 50% by weight and, correspondingly, the aromatic polycarbonate ranges from 90 to 50 % by weight.

The amounts of the red phosphorus and, optionally, of the phosphorus containing organic compound of formula (I) are, generally, correlated with those of the polycarbonate (B), in that these amounts are inversely proportional to those of the polycarbonate. Generally, it is preferred that the quantities of the total phosphorus, given by the sum of the phosphorus both in the free status and in the combined form, be not higher than 10 parts by weight with respect to 100 parts by weight of the mixture of the two (A) and (B) resins.

The quantity of anti-dripping agent, when present, is generally very small compared to that of the other components. Quantities of anti-dripping agent ranging from 0.05 to 1 part, with respect to 100 parts of (A) + (B), can be used.

According to the present invention, a preferred flame-retardant, halogen free, thermoplastic composition (V0 according to UL 94 test), with good flow properties, a satisfactory operating stability, even at high temperatures, and without the formation of toxic combustion products, includes:
(A) from 10 to 50% by weight of a halogen free impact resistant vinyl aromatic copolymer;
(B) from 90 to 50% by weight of a halogen free aromatic polycarbonate;
(C) from 0.1 to 7 parts by weight, with respect to 100 parts by weight of (A) + (B), of red phosphorus;
(D) optionally, from 5 to 15 parts by weight, with respect to 100 parts by weight of (A) + (B), of phosphorus containing organic compound of general formula (I);
(E) optionally, from 0.05 to 1 part by weight, with respect to 100 parts by weight of (A) + (B) of an anti-dripping agent.

The impact resistant vinyl aromatic copolymer (A), used in the thermoplastic composition of the present invention, can be:
(A.1) an impact resistant vinyl aromatic copolymer containing from 2 to 35% by weight of an acrylic monomer, a dienic rubber in an amount not higher than 20% by weight and a vinyl aromatic monomer; or
(A.2) an impact resistant vinyl aromatic copolymer containing from 2 to 35 % by weight of an acrylic monomer, from 5 to 50% by weight of an olefinic elastomer and from 93 to 15% by weight of a vinyl aromatic monomer; the sum of these monomers being equal to 100% by weight.

Preferably, the vinyl aromatic polymer (A.2) comprises from 2 to 35% by weight of an acrylic monomer, from 15 to 30% by weight of an olefinic elastomer and from 35 to 83% by weight of a vinyl aromatic monomer.

The term vinyl aromatic monomer, whenever used in the present description and claims, includes the ethylenically unsaturated compounds having the general formula: 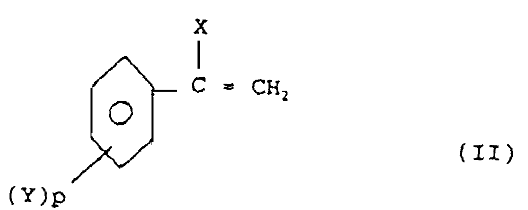 wherein;
- X: represents hydrogen or an alkyl radical having from 1 to 4 carbon atoms;
- p: is zero or an integer from 1 to 5, and
- Y: represents alkyl radical having from 1 to 4 carbon atoms.

Examples of vinyl aromatic monomers having the above-reported general formula are: styrene; methyl-styrene; styrenes alkylated in the nucleus and the corresponding alpha-methyl-styrenes such as ortho and para-methyl-styrenes, ortho and para-ethyl-styrenes; ortho- and para-methyl-alpha-methyl-styrenes.

These monomers can be used individually or in admixture between them or with other copolymerizable ethylenically unsaturated co-monomers such as, for example, maleic anhydride.

Styrene is particularly preferred.

By acrylic monomer, it is meant, at first place and preferably, acrylonitrile; although other acrylic monomers such as methacrylonitrile, acrylic acid, methacrylic acid and their alkyl-esters containing from 1 to 6 carbon atoms in the alkyl radical ca be also used.

The diene rubbers used in copolymer (A.1) for making it impact resistant are: polybutadiene, polyisoprene, copolymers of butadiene and/or isoprene with styrene or with other monomers; polybutadiene is preferred.

The content of these dienic rubbers in the impact resistant vinyl aromatic copolymer is not higher than 20% by weight and preferably is comprised between 2 and 15% by weight.

In the impact resistant vinyl aromatic copolymer (A.2), the olefinic elastomer, which is the substrate on which the acrylic and vinyl aromatic monomers are in part grafted and in part mechanically adhered in the form of vinyl aromatic monomer-acrylic monomer copolymer is a rubbery copolymer, having a Mooney viscosity ranging from 10 to 150 ML 1+4 (100°C) (measured according to ASTM D 1646 - 80), of at least two different straight chain alpha-mono-olefins such as ethylene, propylene, butene-1 and octene-1, with at least another copolymerizable monomer, generally a polyene, and typically a non-conjugated diene. Preferably, one of the alpha mono-olefins is ethylene together with another alpha mono-olefin having a longer chain. The weight ratio of the ethylene to the other alpha-mono-olefin in the rubbery copolymer is usually in the range of from 20/80 to 80/20. Particularly preferred copolymers are the ethylene-propylene-non-conjugated diene terpolymer in which the non-conjugated diene can be cyclic or acyclic such as: 5-methylene-2-norbornene, 5-ethylidene-2-norbornene, 5-isopropylidene-2-norbornene, 1,4-pentadiene, 1,4-hexadiene, 1,5-hexadiene, 1,4-heptadiene, 1,7,9-dodecatriene, methyl-1,5-heptadiene, 2,5-norbornadiene, cyclo-1,5-octadiene, dicyclopentadiene, tetrahydroindene and 5-methyltetrahydroindene. The diene content ranges from about 5 to 20% by weight and, preferably, from 8 to 18% by weight of diene monomeric units in the rubbery terpolymer.

Particularly, a rubbery ethylene-propylene-non-conjugated diene (EPDM) terpolymer, having a Mooney viscosity ranging from 30 to 90 ML 1+4 (100°C) and a iodine number higher than 5, preferably ranging from 10 to 40, is preferred.

The impact resistant vinyl aromatic copolymers (A.1) and(A.2) can be prepared according to any known suspension, mass-suspension or continuous mass polymerization process, provided that the above mentioned compounds are used as starting comonomers.

When the impact resistant vinyl aromatic copolymer (A.1) is prepared by an emulsion polymerization process, the content of the dienic rubber can be also higher than 20% and up to 65% by weight, with a content of acrylic monomer comprised between 2 and 35% by weight.

The halogen free aromatic polycarbonates which are suitable according to the present invention as component (B) are those based on bisphenols of general formula (III): 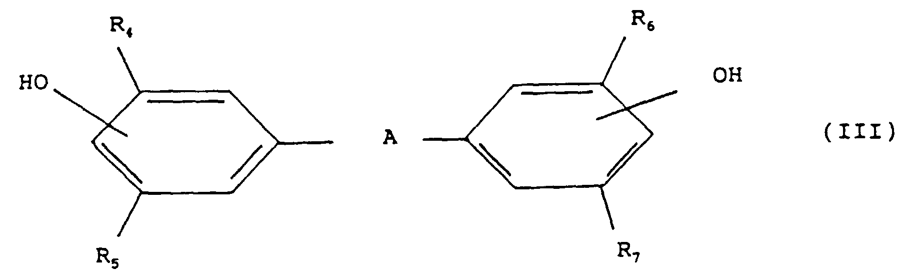 wherein R₄, R₅, R₆, and R₇, which may be the same or different, each represents hydrogen or an alkyl radical containing from 1 to 4 carbon atoms, and A represents a single bond, -O-, -CO-, -SO₂-, an alkylene radical containing from 1 to 6 carbon atoms, an alkylidene radical containing from 2 to 6 carbon atoms, a cycloalkylene radical containing from 5 to 10 carbon atoms, a cycloalkylidene radical containing from 5 to 10 carbon atoms or the radical:

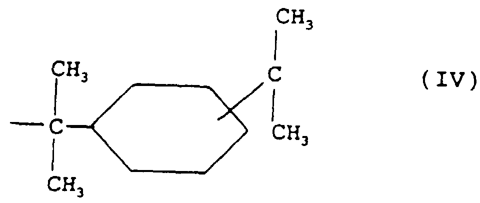

Examples of suitable bisphenols are, for example, hydroquinone, resorcinol, 4,4'-dihydroxydiphenyl, 2,2-bis(4-hydroxyphenyl)-propane, 2,2-bis(4-hydroxy-3,5-dimethylphenyl)-propane, 2,2-bis(4-hydroxy-3,5-dichlorophenyl)-propane, 2,2-bis(4-hydroxy-3,5-dibromophenyl)-propane and 1,1-bis(4-hydroxyphenyl)cyclohexane.

Particularly preferred bisphenols are 2,2-bis-(4-hydroxyphenyl)-propane (bisphenol A), 2,2-bis-(3,5-dimethyl-4-hydroxyphenyl)-propane and 1,1-bis(4-hydroxyphenyl)cyclohexane.

The bisphenols of formula (III) are described, for example, in U.S.A. Patent Nos. 3,028,365; 2,999,835; 3,148,172; 3,275,601; 2,991,273; 3,271,367; 3,062,781 and 2,999,846 and can be prepared by methods known from the literature.

Polycarbonates containing in the chain units deriving from terephthalic and/or isophthalic acid can be utilized.

The aromatic polycarbonates may be produced in a known manner, for example by transesterification in the melt from bisphenols and diphenyl carbonate or by two-phase interfacial process from bisphenol and phosgene, as described in H. Schnell "Chemestry and Physics of Polycarbonates" Interscience Publishers, New York, 1964.

The aromatic polycarbonates may also be branched by the incorporation of small quantities, preferably from 0.05 to 2 moles percent, based on the diphenols used, of trifunctional or more than trifunctional compounds, particularly those containing three or more phenolic hydroxy groups.

The aromatic polycarbonates suitable to be used as component (B) in the compositions of the present invention generally have an average molecular weight of at least 10,000, more specifically ranging from 10,000 and 200,000 and preferably between 20,000 and 80,000, as determined by measurements of relative viscosity in CH₂Cl₂ at 25°C using a concentration of 0.5% by weight.

The aromatic polycarbonates containing the recurring units of formula (III) are well known in the art and are commercially available from different sources, for example: from General Electric Company, Mass., USA with the trade name LEXAN® ; from ECP ENICHEM POLIMERI - Milano with the trade name SINVET®; from PROQUIGEL Brasil with the trade name DUROLON®, etc.

Any type of red phosphorus which is commercially available may be used as component (C) in the composition of the present invention.

Red phosphorus micro-encapsulated with a thermosetting resin or with an inorganic material is preferred for use safety reasons.

Representative examples of thermosetting resins are phenolic resins, epoxy resins and divinylbenzene-styrene copolymers. Representative examples of inorganic materials are titanium dioxide and silicated compounds.

One type of red phosphorus having the above-reported characteristics is known on the market under the trade-name of AMGARD CRP produced and sold by ALBRIGHT & WILSON LTD. - West Midlands - G.B., having average dimensions of between 20 and 30 micrometres.

The phosphorus containing organic compounds having the above-reported general formula (I) are products well known in the literature; for example described in: Ullmann, Enzyklopaedie der Technischen Chemie, Vol. 18, pages 301 et seq., 1979; Huoben-Weyl, Meth. d. org. Chem., Vol. 12/1 page 43, page - 136; Beilstein, Vol. 6, page 177.

Examples of phosphorus containing organic compounds of formula (I) suitable as component (D) in the compositions of the present invention, are triphenyl phosphate, tricresyl phosphate, diphenyl 2-ethylcresyl phosphate, tri(isopropylphenyl) phosphate, diphenyl methanephosphonate, diethyl phenylphosphonate,triphenylphosphine oxide or tricresylphosphine oxide; triphenyl phosphate is preferred. This latter product is known on the marked with the trade-name REOMOL^{R} TPP, produced and sold by CIBA GEIGY.

Any known anti-dripping agent can be used as component (E) in the flame-resistant thermoplastic compositions of the present invention.

A preferred anti-dripping agent is polytetrafluoroethylene (PTFE) and particularly that in very fine powder form having particle dimensions lower than 20 micrometres and preferably from 5 to 0.1 micrometres. This polymer (PTFE) can be obtained by a dispersion polymerization process of tetrafluoroethylene, in the presence of organic and inorganic peroxidic catalysts, at pressures ranging from 10 to 200 Atm and at temperatures ranging from 0 to 200°C.

Examples of PTFE known on the market are: those produced by E.I. Du Pont de Nemours and Company and sold under the trade-name of TEFLON^{R}; those produced by Montefluos under the trade-name of ALGOFLON^{R} and those produced by I.C.I. under the trade-name of FLUON^{R}.

These PTFE can be homopolymers or copolymers of PTFE with another copolymerizable monomer wherein the PTFE is present as the main constituent of the copolymer, preferably at least at a level of 80% by weight.

As above said, the compositions of the present invention can also include, in addition to the components (A), (B), (C), (D) and (E), a grafted copolymer consisting of an elastomeric core having a second order transition temperature lower than 10°C and containing vinyl monomer chains grafted thereon.

The amount of this grafted polymer can range from 0 to 30, preferably from 1 to 10, parts with respect to 100 parts by weight of the mixture (A) and (B).

Said grafted polymer is generally a polymer of the core-shell type comprising an elastomeric core containing, grafted thereon, chains of vinyl monomers.

Preferably, the core-shell polymer comprises from approximatively 25 to approximatively 95% by weight of the elastomeric core and, correspondingly, from about 75 to about 5% by weight of vinyl monomer chains grafted thereon.

The elastomeric core has a second order glass transition temperature lower than 10°C and can be polybutadiene, copolymers of butadiene with styrene, isoprene and/or with acrylonitrile, wherein the butadiene content is higher than 40% by moles, or acrylic rubber.

The vinyl monomers which are grafted on the elastomeric core can be acrylic acid derivatives or methacrylic acid derivatives, vinyl aromatic compounds, vinyl cyanide compounds and polyfunctional derivatives, either individually or in admixture with each other. Specific examples of said grafted vinyl monomers comprise methacrylic acid alkyl esters, in which the alkyl radical contains from 1 to 16 carbon atoms, preferably methyl methacrylate; esters of methacrylic acid with polyfunctional alcohols such as 1,3-butylen glycol dimethacrylate and trimethylol-propane trimethacrylate, allyl methacrylate and/or diallyl methacrylate; vinyl aromatic compounds such as styrene, vinyl toluene, alpha-methyl styrene, halogenated styrene, vinyl naphtene or di-vinyl benzene; styrene being particularly preferred; vinyl cyanide compounds such as acrylonitrile, methacrylonitrile, alpha-halogenated acrylonitriles, acrylonitrile being particularly preferred; maleic acid and anhydride.

These vinyl monomers can be used individually or in admixture thereof.

The elastomeric core of the grafted copolymer, used in the compositions of the present invention, has preferably a second order transition temperature lower than -10°C and even lower than -50°C and a cross-linking degree higher than 50% and up to 99% by weight (gel content), determined by extraction.

The grafted copolymer used in the compositions of the present invention has preferably an elastomer content higher than 35% and up to 95% by weight.

Said grafted copolymers can be prepared by means of any known method such as bulk polymerization, suspension polymerization, bulk-suspension polymerization, solution polymerization or emulsion polymerization.

A typical example of grafted copolymer to be used in the subject composition can be a three-step polymer having a rubber-like core based on butadiene, a second step of polymerized styrene and a final step, or shell, of polymerized methyl methacrylate and 1,3-butylene-glycol dimethacrylate.

The above grafted polymers are well known on the market and they are available from a great number of manufactures such as, for example, from Rhom & Haas Company, Philadelphia, USA, under the trade-name PARALOID® EXL 2600, EXL 2300, EXL 3600 and EXL 3300 or from Kaneka, Belgium, under the trade-name KANEACE® M 511. and so on.

The mixtures of the present invention can be prepared by any conventional mixing method.

The mixing is generally carried out in the molten state, previous a premixing at room temperature, in known mixing units, such as single and twin-screw extruders, Banbury mixer and mixing rolls at a temperature comprised between 220 and 300°C.

The compositions may further contain other additives intimately incorporated therein, such as stabilizing agents, anti-acid agent, plasticizers, lubricants, flow agents, antistatic agents, dyes, pigments, glass fibres or other inorganic fillers to give special characteristics to the material.

The compositions of the present invention are easy to be processed and exhibit a combination of properties which make them suitable to be utilized for the preparation of articles endowed with a high tenacity along with a high thermoresistance. These compositions are consequently applied in the fields of the household electric apparatuses, of electronics and technical articles in general in the form of films, sheets, strips, bands, rods, boxes, pans and containers. The compositions can be used to produce foamed articles by means of conventional techniques.

For a better understanding of the present invention and to reduce it to practice, a few illustrative but not limitative examples are given hereinafter.

In the examples, all parts and percentages are given by weight, if not differently indicated.

In the examples, for measuring the characteristics of the compositions of the present invention, the following methods were used:

### Flame-resistant properties

The inflammability was determined according to the "Underwriters' Laboratory" method called UL-94 V described in "Standard For Tests for Flammability of Plastic Materials For Parts in Devices and Appliances" 3 Edition, January 28, 1980, on test samples having dimensions 127x12.7x1.59 mm (5"x0.5"x0.0625").

### Mechanical properties

The IZOD resilience with notch was determined at 23°C, according to ASTM D 256, on test samples having a thickness of 3.2 mm.

### Thermal properties

The VICAT B softening temperature (5 kg in oil) was determined, according to ISO 306, with an increase in temperature of 120°C/hour.

### Rheological properties

The Melt-Index (M.F.I.) was determined according to ASTM D 1238, at 240°C and 5 kg.

### EXAMPLES 1-10

The following components were blended, at room temperature, in a rotating drum mixer:
- an impact resistant vinyl aromatic copolymer (ABS) consisting of 67.5% by weight of styrene, 10.5% by weight of polybutadienic rubber and 22% by weight of acrylonitrile, in the quantities shown in Table I;
- SINVET® (PC) polycarbonate produced and sold by ECP ENICHEM POLIMERI, in the quantities shown in Table I;
- PARALOID^{R} EXL 2600 rubber consisting of 60% by weight of a core of polybutadiene rubber on which chains of styrene-methylmethacrylate copolymer (ratio 1:1) are grafted in an amount of 40%, in the quantities shown in Table I;
- red phosphorus, produced and sold by Albright & Wilson Ltd. under the trade-name of AMGARD® CRP, in the quantities shown in Table I;
- triphenylphosphate, produced and sold by Ciba Geigy under the trade-name of REOMOL® TPP, in the quantities shown in Table I.

The mixtures thus obtained were dried at 100°C for 4 hours and extruded by means of a BAKER & PERKINS twin-screw extruder, with degassing, at a temperature of 260°C.

By cutting the strips at the exit of the extruder, pellets were obtained which were dried for 4 hours at 100°C.

To determine their characteristics, the pellets were injection moulded at a temperature of 250-270°C on a Battenfeld 350 CD PLUS press to obtain test samples with dimensions required by the regulations.

The properties of the test samples thus obtained are shown in Table I below.

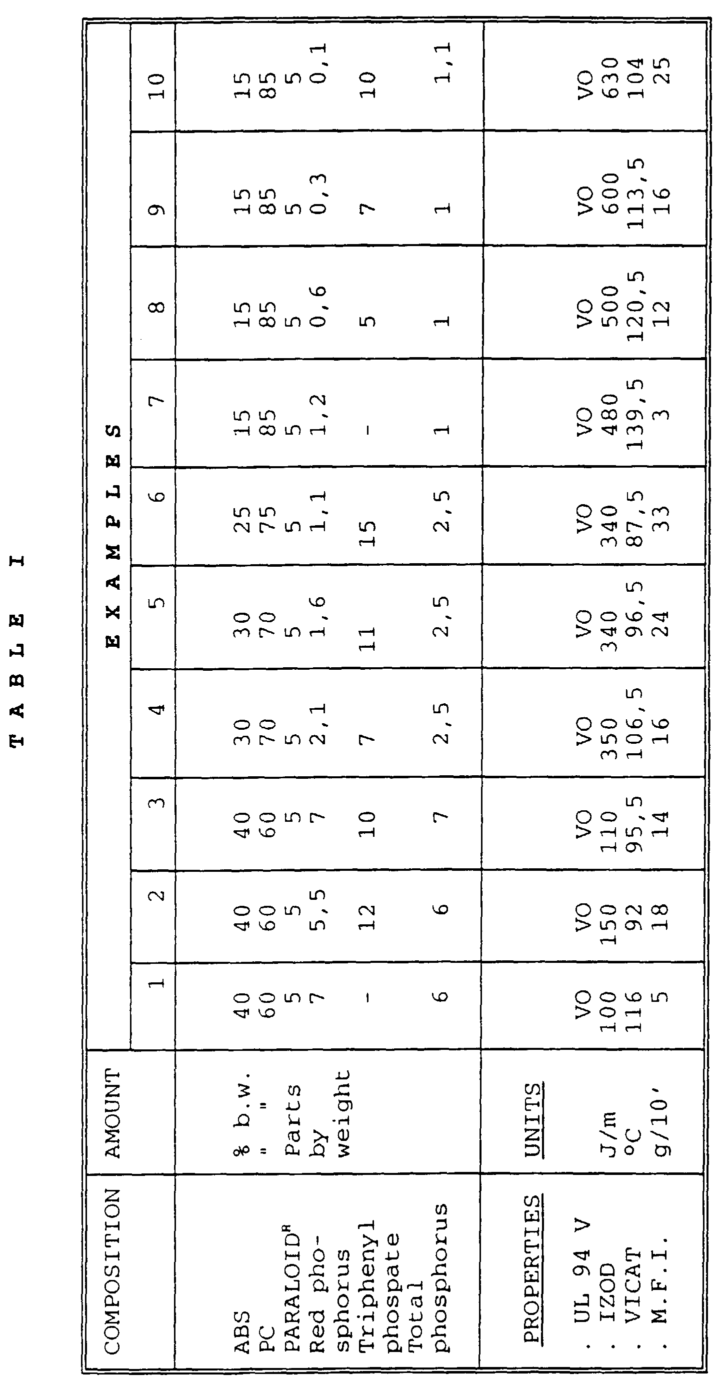

## Claims

1. A flame-retardant, halogen-free, thermoplastic composition, classifiable under VO rating according to the UL 94 V test, comprising: a halogen-free impact resistant vinyl aromatic copolymer, consisting of a vinyl aromatic monomer, an acrylic monomer and a rubber; a halogen-free aromatic polycarbonate, and red phosphorus.

2. The thermoplastic composition according to claim 1, comprising:
(A) from 70 to 5 parts by weight of an impact resistant, halogen-free, vinyl aromatic copolymer, consisting of a vinyl aromatic monomer, an acrylic monomer and a rubber;
(B) from 30 to 95 parts by weight of a halogen-free aromatic polycarbonate;
(C) from 0.1 to 10 parts by weight, with respect to 100 parts by weight of the mixture of the two (A) and (B) resins, of red phosphorus;
(D) from 0 to 15 parts by weight, with respect to 100 parts by weight of the mixture of the two (A) and (B) resins, of a phosphorus containing organic compound of the formula: 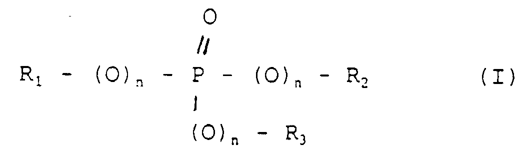 wherein R₁, R₂ and R₃ are, independently from each other, an alkyl radical containing from 1 to 8 carbon atoms or an aryl radical or an optionally alkylsubstituted aryl radical containing from 6 to 20 carbon atoms, and n represents 0 or 1; and,
(E) optionally, an anti-dripping agent.

3. The thermoplastic composition according to claim 1 or 2,containing in addition a grafted polymer consisting of an elastomeric core having a glass transition temperature of the second order lower than 10°C and containing chains of vinyl aromatic monomers grafted thereon.

4. The thermoplastic composition according to anyone of the preceding claims, wherein the amount of the impact resistant vinyl aromatic copolymer (A) ranges from 10 to 50% by weight and that of the aromatic polycarbonate (B) ranges from 90 to 50 % by weight, with respect to the sum of the two (A) and (B) resins.

5. The thermoplastic composition according to anyone of the preceding claims, wherein the amount of the total phosphorus, given by the sum of the phosphorus both in the free status and in the combined form, is not higher than 10 parts by weight with respect to 100 parts by weight of the mixture of the two (A) and (B) resins.

6. The thermoplastic composition according to anyone of the preceding claims, wherein the amount of the anti-dripping agent is comprised between 0.05 and 1 part by weight, with respect to 100 parts of the two (A) and (B) resins.

7. The thermoplastic composition according to anyone of the preceding claims, comprising:
(A) from 10 to 50% by weight of a halogen-free impact resistant vinyl aromatic copolymer;
(B) from 90 to 50% by weight of a halogen-free aromatic polycarbonate;
(C) from 0.1 to 7 parts by weight, with respect to 100 parts by weight of (A) + (B), of red phosphorus;
(D) optionally, from 5 to 15 parts by weight, with respect to 100 parts by weight of (A) + (B), of phosphorus containing organic compound of general formula (I);
(E) optionally, from 0.05 to 1 part by weight, with respect to 100 parts by weight of (A) + (B), of an anti-dripping agent, and
(F) from 0 to 30 parts by weight, with respect to 100 parts by weight of (A) + (B), of the grafted polymer.

8. The thermoplastic composition according to anyone of the preceding claims, wherein the impact resistant vinyl aromatic copolymer (A) contains from 2 to 35% by weight of an acrylic monomer, a dienic rubber in an amount not higher than 20%, preferably comprised between 2 and 15%, by weight, and a vinyl aromatic monomer.

9. The thermoplastic composition according to anyone of the preceding claims from 1 to 7, wherein the impact resistant vinyl aromatic copolymer containing from 2 to 35 % by weight of an acrylic monomer, a dienic rubber in an amount higher than 20% and up to 65% by weight and a vinyl aromatic monomer.

10. The thermoplastic composition according to anyone of the preceding claims from 1 to 7, wherein the impact resistant vinyl aromatic copolymer comprises from 2 to 35% by weight of an acrylic monomer, from 5 to 50%, preferably from 15 to 30%, by weight of an olefinic elastomer; and from 93 to 15%, preferably from 83 to 35%, by weight of a vinyl aromatic monomer, the sum of these monomers being equal to 100% by weight.

11. The thermoplastic composition according to anyone of the preceding claims, wherein the acrylic monomer is acrylonitrile.

12. The thermoplastic composition according to anyone of the preceding claims, wherein the vinyl aromatic monomer is styrene.

13. The thermoplastic composition according to anyone of the preceding claims 8, 9, 11 and 12, wherein the dienic rubber is polybutadiene.

14. The thermoplastic composition according to anyone of the preceding claims 10, 11 and 12, wherein the olefinic elastomer is a rubbery ethylene-propylene-non-conjugated diene terpolymer having a Mooney viscosity ranging from 30 to 90 ML 1+4 (100°C) and a iodine number higher than 5, preferably ranging from 10 to 40.

15. The thermoplastic composition according to anyone of the preceding claims, wherein the red phosphorus is microencapsulated with a thermosetting resin or with an inorganic material.

16. The thermoplastic composition according to anyone of the preceding claims from 2 to 15, wherein the phosphorus containing organic compound of formula (I) of claim 2 is triphenyl phosphate.

17. The thermoplastic composition according to anyone of the preceding claims from 3 to 16, wherein the amount of the grafted polymer is comprised between 1 and 10 parts by weight with respect to 100 parts by weight of the mixture (A) + (B).

18. The thermoplastic composition according to anyone of the preceding claims, wherein the grafted polymer is a coreshell comprising from 25 to 95% by weight of elastomeric core and from about 75 to about 5% by weight of vinyl monomer chains grafted thereon.

19. The thermoplastic composition according to claim 18, wherein the elastomeric core is selected from the group consisting of polybutadiene, copolymers of butadiene with styrene, isoprene and/or with acrylonitrile, wherein the butadiene content is higher than 40% by moles, and acrylic rubber; and the vinyl monomers are selected from the group consisting of acrylic acid derivatives, methacrylic acid derivatives, vinyl aromatic compounds, vinyl cyanide compounds, polyfunctional derivatives and mixture thereof.

20. The thermoplastic composition according to anyone of the preceding claims, containing in addition stabilizing agents, anti-acid agent, plasticizers, lubricants, flow agents, antistatic agents, dyes, pigments, glass fibres and/or other inorganic fillers.

## Patentansprüche

1. Flammhemmende halogenfreie thermoplastische Zusammensetzung, klassifizierbar unter der VO-Einstufung entsprechend dem Test UL 94 V, umfassend: ein halogenfreies schlagfestes vinylaromatisches Copolymeres, das aus einem vinylaromatischen Monomeren, einem acrylartigen Monomeren und einem Kautschuk besteht, ein halogenfreies aromatisches Polycarbonat und roten Phosphor.

2. Thermoplastische Zusammensetzung nach Anspruch 1, umfassend:
(A) von 70 bis 5 Gew.-Teile eines schlagfesten halogenfreien vinylaromatischen Copolymeren, bestehend aus einem vinylaromatischen Monomeren, einem acrylartigen Monomeren und einem Kautschuk,
(B) von 30 bis 95 Gew.-Teile eines halogenfreien aromatischen Polycarbonats,
(C) von 0,1 bis 10 Gew.-Teile, bezogen auf 100 Gew.-Teile der Mischung aus den beiden Harzen (A) und (B), roten Phosphor,
(D) von 0 bis 15 Gew.-Teile, bezogen auf 100 Gew.-Teile der Mischung aus den beiden Harzen (A) und (B), einer phosphorhaltigen organischen Verbindung der Formel: 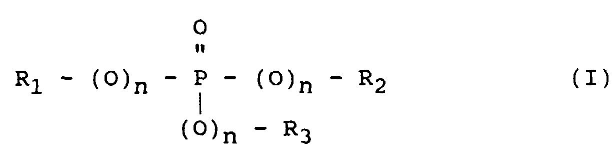 worin R₁, R₂ und R₃ unabhängig voneinander sind: ein Alkylrest mit 1 bis 8 Kohlenstoffatomen oder ein Arylrest oder ein wahlweise alkylsubstituierter Arylrest mit 6 bis 20 Kohlenstoffatomen, und n = 0 oder 1 ist, und
(E) wahlweise ein Antitropfmittel.

3. Thermoplastische Zusammensetzung nach Anspruch 1 oder 2, enthaltend zusätzlich ein Pfropfpolymeres, bestehend aus einem elastomeren Kern mit einem Einfrierbereich (Glasübergangstemperatur zweiter Ordnung) niedriger als 10° C und enthaltend hierauf gepfropfte Ketten von vinylaromatischen Monomeren.

4. Thermoplastische Zusammensetzung nach einem der vorhergehenden Ansprüche, worin die Menge des schlagfesten vinylaromatischen Copolymeren (A) von 10 bis 50 Gew.-% reicht und diejenige des aromatischen Polycarbonats (B) von 90 bis 50 Gew.-% reicht, bezogen auf die Summe der beiden Harze (A) und (B).

5. Thermoplastische Zusammensetzung nach einem der vorhergehenden Ansprüche, worin die Menge des Gesamtphosphors, gegeben durch die Summe des Phosphors sowohl in freiem Zustand als auch in der gebundenen Form, nicht höher als 10 Gew.-Teile ist, bezogen auf 100 Gew.-Teile der Mischung der beiden Harze (A) und (B).

6. Thermoplastische Zusammensetzung nach einem der vorhergehenden Ansprüche, worin die Menge des Antitropfmittels zwischen 0,05 und 1 Gew.-Teilen liegt, bezogen auf 100 Teile der beiden Harze (A) und (B).

7. Thermoplastische Zusammensetzung nach einem der vorhergehenden Ansprüche, umfassend:
(A) von 10 bis 50 Gew.-% eines halogenfreien schlagfesten vinylaromatischen Copolymeren,
(B) von 90 bis 50 Gew.-% eines halogenfreien aromatischen Polycarbonats,
(C) von 0,1 bis 7 Gew.-Teile, bezogen auf 100 Gew.-Teile von (A) + (B), roten Phosphor,
(D) wahlweise von 5 bis 15 Gew.-Teile, bezogen auf 100 Gew.-Teile von (A) + (B), an phosphorhaltiger organischer Verbindung der allgemeinen Formel (I),
(E) wahlweise von 0,05 bis 1 Gew.-Teile, bezogen auf 100 Gew.-Teile von (A) + (B), eines Antitropfmittels, und
(F) von 0 bis 30 Gew.-Teile, bezogen auf 100 Gew.-Teile von (A) + (B), des gepfropften Polymeren.

8. Thermoplastische Zusammensetzung nach einem der vorhergehenden Ansprüche, worin das schlagfeste vinylaromatische Copolymere (A) von 2 bis 35 Gew.-% eines acrylartigen Monomeren, einen Dienkautschuk in einer Menge nicht höher als 20 Gew.-%, bevorzugt zwischen 2 und 15 Gew.-%, und ein vinylaromatisches Monomeres enthält.

9. Thermoplastische Zusammensetzung nach einem der vorhergehenden Ansprüche 1 bis 7, worin das schlagfeste vinylaromatische Copolymere von 2 bis 35 Gew.-% eines acrylartigen Monomeren, einen Dienkautschuk in einer Menge höher als 20 Gew.-% und bis hinauf zu 65 Gew.-% und ein vinylaromatisches Monomeres enthält.

10. Thermoplastische Zusammensetzung nach einem der vorhergehenden Ansprüche 1 bis 7, worin das schlagfeste vinylaromatische Copolymere von 2 bis 35 Gew.-% eines acrylartigen Monomeren, von 5 bis 50 Gew.-%, bevorzugt 15 bis 30 Gew.-%, eines olefinischen Elastomeren und von 93 bis 15 Gew.-%, bevorzugt von 83 bis 35 Gew.-%, eines vinylaromatischen Monomeren enthält, wobei die Summe dieser Monomeren gleich 100 Gew.-% ist.

11. Thermoplastische Zusammensetzung nach einem der vorhergehenden Ansprüche, worin das acrylartige Monomere Acrylnitril ist.

12. Thermoplastische Zusammensetzung nach einem der vorhergehenden Ansprüche, worin das vinylaromatische Monomere Styrol ist.

13. Thermoplastische Zusammensetzung nach einem der vorhergegehenden Ansprüche 8, 9, 11 und 12, worin der Dienkautschuk Polybutadien ist.

14. Thermoplastische Zusammensetzung nach einem der vorhergegehenden Ansprüche 10, 11 und 12, worin das olefinische Elastomere ein kautschukartiges Ethylen-Propylen-nichtkonjugiertes-Dienterpolymeres mit einer Mooney-Viskosität im Bereich von 30 bis 90 ML 1+4 (100° C) und einer Jodzahl höher als 5, bevorzugt im Bereich von 10 bis 40, ist.

15. Thermoplastische Zusammensetzung nach einem der vorhergegehenden Ansprüche, worin der rote Phosphor mit einem hitzegehärteten Harz oder mit einem anorganischen Material mikroeingekapselt ist.

16. Thermoplastische Zusammensetzung nach einem der vorhergegehenden Ansprüche 2 bis 15, worin die phosphorhaltige Verbindung der Formel (I) von Anspruch 2 Triphenylphosphat ist.

17. Thermoplastische Zusammensetzung nach einem der vorhergegehenden Ansprüche 3 bis 16, worin die Menge des gepfropften Polymeren zwischen 1 und 10 Gew.-Teilen, bezogen auf 100 Gew.-Teile der Mischung von (A) + (B), liegt.

18. Thermoplastische Zusammensetzung nach einem der vorhergegehenden Ansprüche, worin das gepfropfte Polymere ein Kern-Mantel-polymeres ist, umfassend von 25 bis 95 Gew.-% eines elastomeren Kerns und von etwa 75 bis etwa 5 Gew.-% hierauf gepfropfte Vinylmonomerketten.

19. Thermoplastische Zusammensetzung nach Anspruch 18, worin der elastomere Kern ausgewählt ist aus der Gruppe, die besteht aus Polybutadien, Copolymeren von Butadien mit Styrol, Isopren und/oder mit Acrylnitril, worin der Butadiengehalt höher als 40 Mol-% ist, und Acrylkautschuk, und die Vinylmonomeren ausgewählt sind aus der Gruppe, die besteht aus Acrylsäurederivaten, Methacrylsäurederivaten, vinylaromatischen Verbindungen, Vinylcyanidverbindungen, polyfunktionellen Derivaten und Mischungen hiervon.

20. Thermoplastische Zusammensetzung nach einem der vorhergehenden Ansprüche, enthaltend zusätzlich Stabilisatoren, Antisäuremittel, Weichmacher, Gleitmittel, Fließmittel, antistatische Mittel, Farbstoffe, Pigmente, Glasfasern und/oder andere anorganische Füllstoffe.

## Revendications

1. Composition thermoplastique ignifuge ne contenant pas d'halogène, pouvant être classée dans la qualification VO selon le test UL 94 V, comprenant : un copolymère vinylaromatique résistant à l'impact et ne contenant pas d'halogène, composé d'un monomère vinylaromatique, d'un monomère acrylique et d'un caoutchouc ; un polycarbonate aromatique ne contenant pas d'halogène et du phosphore rouge.

2. Composition thermoplastique selon la revendication 1, comprenant :
(A) 70 à 5 parties en poids d'un copolymère vinylaromatique résistant à l'impact et ne contenant pas d'halogène, composé d'un monomère vinylaromatique, d'un monomère acrylique et d'un caoutchouc ;
(B) 30 à 95 parties en poids d'un polycarbonate aromatique ne contenant pas d'halogène ;
(C) 0,1 à 10 parties en poids, par rapport aux 100 parties en poids du mélange des deux résines (A) et (B), de phosphore rouge ;
(D) 0 à 15 parties en poids, par rapport aux 100 parties en poids du mélange des deux résines (A) et (B), d'un composé organique contenant du phosphore de formule : 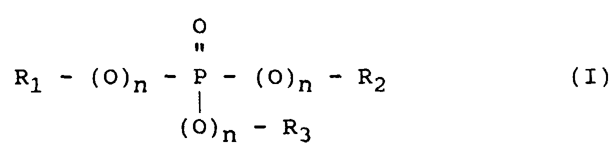 où R₁, R₂ et R₃ sont, indépendamment les uns des autres, un radical alkyle contenant 1 à 8 atomes de carbone ou un radical aryle ou un radical dont on a facultativement remplacé l'aryle par l'alkyle et contenant 6 à 20 atomes de carbone, et n représente 0 ou 1 ; et
(E) éventuellement, un agent anti-goutte.

3. Composition thermoplastique selon la revendication 1 ou 2, contenant en outre un polymère greffé composé d'un noyau élastomère présentant une température de transition vitreuse du deuxième ordre inférieure à 10°C et sur lequel sont greffées des chaînes de monomères vinylaromatiques.

4. Composition thermoplastique selon l'une quelconque des revendications précédentes, dans laquelle la quantité de copolymère vinylaromatique (A) résistant à l'impact est comprise entre 10 et 50% en poids et celle du polycarbonate aromatique (B) est comprise entre 90 et 50% en poids, par rapport à la somme des deux résines (A) et (B).

5. Composition thermoplastique selon l'une quelconque des revendications précédentes, dans laquelle la quantité de phosphore total, donnée par la somme du phosphore à la fois à l'état libre et dans la forme combinée, n'est pas supérieure à 10 parties en poids par rapport aux 100 parties en poids du mélange des deux résines (A) et (B).

6. Composition thermoplastique selon l'une quelconque des revendications précédentes, dans laquelle la quantité d'agent anti-goutte est comprise entre 0,05 et 1 partie en poids par rapport aux 100 parties en poids des deux résines (A) et (B).

7. Composition thermoplastique selon l'une quelconque des revendications précédentes, comprenant :
(A) 10 à 50% en poids de copolymère vinylaromatique résistant à l'impact et ne contenant pas d'halogène ;
(B) 90 à 50% en poids d'un polycarbonate aromatique ne contenant pas d'halogène ;
(C) 0,1 à 7 parties en poids, par rapport aux 100 parties en poids de (A) + (B), de phosphore rouge ;
(D) éventuellement 5 à 15 parties en poids, par rapport aux 100 parties en poids de (A) + (B), d'un composé organique de formule générale (I) contenant du phosphore ;
(E) éventuellement 0,05 à 1 partie en poids, par rapport aux 100 parties en poids de (A) + (B), d'un agent anti-goutte, et
(F) 0 à 30 parties en poids, par rapport aux 100 parties en poids de (A) + (B), du polymère greffé.

8. Composition thermoplastique selon l'une quelconque des revendications précédentes, dans laquelle le copolymère vinylaromatique résistant à l'impact (A) contient 2 à 35% en poids d'un monomère acrylique, un caoutchouc diène en une quantité non supérieure à 20%, de préférence comprise entre 2 et 15%, en poids, et un monomère vinylaromatique.

9. Composition thermoplastique selon l'une quelconque des revendications 1 à 7, dans laquelle le copolymère vinylaromatique résistant à l'impact contient 2 à 35% en poids d'un monomère acrylique, un caoutchouc diène en une quantité supérieure à 20%, pouvant aller jusqu'à 65% en poids, et un monomère vinylaromatique.

10. Composition thermoplastique selon l'une quelconque des revendications 1 à 7, dans laquelle le copolymère vinylaromatique résistant à l'impact contient 2 à 35% en poids d'un monomère acrylique, 5 à 50%, de préférence 15 à 30%, en poids d'un élastomère oléfinique ; et 93 à 15%, de préférence 83 à 35%, en poids d'un monomère vinylaromatique, la somme de ces monomères étant égale à 100% en poids.

11. Composition thermoplastique selon l'une quelconque des revendications précédentes, dans laquelle le monomère acrylique est de l'acrylonitrile.

12. Composition thermoplastique selon l'une quelconque des revendications précédentes, dans laquelle le monomère vinylaromatique est du styrène.

13. Composition thermoplastique selon l'une quelconque des revendications 8, 9, 11 et 12, dans laquelle le caoutchouc diène est du polybutadiène.

14. Composition thermoplastique selon l'une quelconque des revendications 10, 11 et 12, dans laquelle l'élastomère oléfinique est un terpolymère diène d'éthylène-propylène non conjugué et caoutchouteux ayant une viscosité Mooney comprise entre 30 et 90 ML 1+4 (à 100°C) et un indice d'iode supérieur à 5, de préférence compris entre 10 et 40.

15. Composition thermoplastique selon l'une quelconque des revendications précédentes, dans laquelle le phosphore rouge est conditionné en micro-capsules avec une résine thermodurcissable ou avec un matériau inorganique.

16. Composition thermoplastique selon l'une quelconque des revendications 2 à 15, dans laquelle le composé organique de formule (I) contenant du phosphore de la revendication 2 est du phosphate triphényle.

17. Composition thermoplastique selon l'une quelconque des revendications 3 à 16, dans laquelle la quantité de polymère greffé est comprise entre 1 et 10 parties en poids par rapport aux 100 parties en poids du mélange (A) + (B).

18. Composition thermoplastique selon l'une quelconque des revendications précédentes, dans laquelle le polymère greffé est un enrobage de noyau comprenant 25 à 95% en poids de noyau élastomère, et environ 75 à environ 5% en poids de chaînes de vinylmonomères greffées sur celui-ci.

19. Composition thermoplastique selon la revendication 18, dans laquelle le noyau élastomère est choisi dans le groupe composé par le polybutadiène, les copolymères de butadiène contenant du styrène, de l'isoprène et ou de l'acrylonitrile, dans lesquels la teneur en butadiène est supérieure à 40% par mole, et le caoutchouc acrylique ; et les vinylmonomères sont choisis dans le groupe composé par les dérivés de l'acide acrylique, les dérivés de l'acide méthacrylique, les composés vinylaromatiques, les composés vinylcyanures, les dérivés polyfonctionnels et les mélanges de ceux-ci.

20. Composition thermoplastique selon l'une quelconque des revendications précédentes, contenant en outre des stabilisants, un agent anti-acide, des plastifiants, des lubrifiants, des agents de fluidité, des agents anti-statiques, des colorants, des pigments, des fibres de verre et/ou d'autres matières de remplissage inorganiques.
